# EUROPÄISCHE PATENTSCHRIFT

(11) **EP 3 037 247 B1**
(45) Veröffentlichungstag und Bekanntmachung des Hinweises auf die Patenterteilung: **31.01.2018**
(21) Anmeldenummer: 15153433.6
(22) Anmeldetag: 02.02.2015
(51) Int. Cl.: B29C 67/24, B29C 45/14, B29C 51/08, B29C 45/00, B29C 45/34, B29C 51/14, B32B 37/14

(54) **Verfahren zur Herstellung eines Sandwichbauteiles**
Method for producing a sandwich component
Procédé de fabrication d'un élément sandwich

(30) Priorität: 22.12.2014 EP 14199859
(43) Veröffentlichungstag der Anmeldung: 29.06.2016
(73) Patentinhaber: Magna Steyr Fahrzeugtechnik AG & Co KG, 8041 Graz (AT)
(72) Erfinder: Dietz, Wolfgang, 8081 Pirching (AT); Drezga, Danijel, 4910 Ried im Innkreis (AT); Krammer, Christoph, 8530 Deutschlandsberg (AT); Wolfsberg, Günter, 8501 Lieboch (AT)
(74) Vertreter: Zangger, Bernd

(56) Entgegenhaltungen:
- EP-A1- 2 275 307
- WO-A1-2012/015583
- DE-A1-102005 049 640
- DE-A1-102007 062 758
- Hennecke: "Hennecke-Presseinformationen | Hennecke GmbH - Maschinen, Anlagen und Technologien für die Verarbeitung von Polyurethan", , 30. Januar 2014 (2014-01-30), XP055181689, Gefunden im Internet: URL:https://web.archive.org/web/2014013001 0819/http://www.hennecke.com/news/press [gefunden am 2015-04-08] & Hennecke ET AL: "Mit Sicherheit leicht! Herstellung von Faserverbund-Motorhauben Basierend auf langjährigem Know-how im Sandwich-Leichtbau mit Ladeböden und Schiebehimmeln sind die drei Partner", , 18. Oktober 2013 (2013-10-18), XP055181697, Gefunden im Internet: URL:http://www.hennecke.com/news/mit-siche rheit-leicht-herstellung-von-faserverbund- motorhauben [gefunden am 2015-04-08]
- Osborne Industries: "Reaction Injection Molding : FAQ | Osborne Industries", , 6. Dezember 2013 (2013-12-06), XP055181723, Gefunden im Internet: URL:https://web.archive.org/web/2013120619 0741/http://www.osborneindustries.com/reac tion-injection-molding-faq.php [gefunden am 2015-04-08]
- Nuno Ferreira: "Vakuum Lösungen für Spritzgußwerkzeuge", Heißkanalfachtag, 14. Mai 2013 (2013-05-14), XP055181786, Gefunden im Internet: URL:http://www.weschu.de/unternehmen/Facht ag_Vakuum_CUMSA.pdf [gefunden am 2015-04-09]

## Beschreibung

### Gebiet der Erfindung

Die vorliegende Erfindung betrifft ein Verfahren zur Herstellung eines Sandwichbauteiles.

### Stand der Technik

Sandwichbauteile sind typischerweise flächige Bauteile die aus zumindest drei Lagen aufgebaut sind, nämlich einer zentralen Kernlage zwischen zwei Deckschichten oder Decklagen und werden beispielsweise im Automobilbau als Karosseriebauteile eingesetzt, insbesondere für den Automobilbau in Leichtbauweise. Meist werden flächige Sandwichbauteile erzeugt, deren Form in einer Formpresse angepasst werden kann.

Aus der DE 10 2010 0054 56 A1 ist beispielsweise ein Sandwichbauteil bekannt, umfassend einen Wabenkern mit einer Vielzahl von Stegen und zumindest einer Deckschicht, wobei der Wabenkern aus einem auf Zellulose basierten Material, insbesondere Papier besteht, wobei die Deckschicht aus einem Faser verstärkten Halbzeug mit einer thermoplastischen Kunststoffmatrix gebildet wird, wobei die Stege des Wabenkerns an Anschlussstellen zu der Deckschicht wenigstens teilweise in die thermoplastische Kunststoffmatrix der Deckschicht aufgenommen sind, so dass ein Verbund des Sandwichbauteils bereitgestellt wird.

Aus der DE 10 2012 006 609 A1 ist ein Sandwichbauteil bekannt, mit zwei faserverstärkten thermoplastischen Deckschichten und einer dazwischen angeordneten Wabenkernlage, wobei die Deckschichten mittels eines thermoplastischen Materials mit der Wabenkernlage verbunden ist, und wobei zumindest eine Seite des Sandwichbauteils eine Dekorlage aufweist, die auf der Deckschicht angeordnet ist, wobei das Sandwichbauteil ferner zumindest eine Schaumlage umfasst, die zwischen der Deckschicht und der Dekorlage angeordnet ist, wobei die Schaumlage mit der Deckschicht und der Dekorlage verbunden ist. Durch diese Lösung soll ein kaschiertes Sandwichbauteil geschaffen werden, dass durch den verwendeten Stützkern entstehende Oberflächenfehler an der Dekorlage vermeiden soll. Aus der Veröffentlichung "Mit Sicherheit leicht! Herstellung von Faserverbund-Motorhauben" der Hennecke GmbH geht ein Verfahren zur Herstellung eines Sandwichbauteiles hervor,bei dem a) ein Wabenkern mit einer Vielzahl an Stegen beidseitig mit zumindest einer Lage eines Fasermaterials, welche Decklagen bilden, belegt oder ummantelt wird, b)das Paket aus Wabenkern und Faserlagen mit einer PUR-Matrix besprüht wird, c) das Paket in ein Formpresswerkzeug gelegt und entsprechend der geforderten Bauteilgeometrie zu einem Bauteil verpresst wird und aushärtet und d) zumindest auf eine Sichtseite des Bauteils anschließend eine Class-A Oberfläche als RIM-Schicht in einem Reaction Injection Molding Verfahren aufgebracht wird.

### Zusammenfassung der Erfindung

Es ist eine Aufgabe der Erfindung, ein Verfahren zur Herstellung eines Sandwichbauteiles anzugeben, dass erlaubt ein Sandwichbauteil mit einer Class-A Oberfläche ohne aufwändige Nachbearbeitung der sichtbaren Oberfläche des Sandwichbauteils herzustellen
Die Lösung der Aufgabe erfolgt durch ein Verfahren zur Herstellung eines Sandwichbauteiles,
umfassend die Schritte dass
- in verschiedenen Zonen unterschiedlich viele übereinandergeschichtete Wabenkerne mit einer Vielzahl an Stegen beidseitig mit zumindest einer Lage eines Fasermaterials, welche Decklagen bilden, belegt oder ummantelt werden,
- das Paket aus Wabenkernen und Faserlagen mit einer PUR-Matrix getränkt, benetzt oder besprüht wird,
- das Paket in ein Formpresswerkzeug gelegt und entsprechend der geforderten Bauteilgeometrie zu einem Bauteil verpresst wird und aushärtet,
- zumindest auf eine Sichtseite des Bauteils anschließend eine Class-A Oberfläche als RIM-Schicht in einem Reaction Injection Molding (RIM) Verfahren, insbesondere einem Vakuum Reaction Injection Molding Verfahren (V-RIM), aufgebracht wird, wobei das Aufbringen der RIM-Schicht in einem geschlossenen und zonenbeheizten RIM-Werkzeug erfolgt.

Unter "Class-A Oberfläche" wird erfindungsgemäß verstanden, dass Unebenheiten, insbesondere Welligkeiten auf Grund der stirnseitigen Kanten des Wabenkernes an der Oberfläche des Bauteiles soweit vermieden sind, dass eine Lackierung des Bauteils ohne nachträglicher Entfernung solcher Unebenheiten möglich ist, also die Oberfläche ausreichend hohe Krümmungsstetigkeit aufweist, somit ausreichend glatt ist, um als sichtbare Oberfläche beispielsweise einer Automobilkarosserie verwendet werden zu können. Außer einer eventuellen Oberflächenaktivierung und nachfolgenden Lackiervorgängen ist daher keine Nachbearbeitung im üblichen Sinn, der beschriebenen Beseitigung von Welligkeiten, erforderlich.

Eine Vorrichtung die zur Durchführung eines solchen Verfahrens ausgelegt ist, umfasst ein RIM Werkzeug, wobei das RIM Werkzeug zonenbeheizbar ist, so dass verschiedene Zonen des Sandwichbauteils verschieden stark geheizt werden können.

Ein erfindungsgemäßes Verfahren zur Herstellung eines Faserverbund-Sandwichbauteiles, umfasst, dass in verschiedenen Zonen unterschiedlich viele übereinandergeschichtete Wabenkerne mit einer Vielzahl von Stegen, beidseitig, insbesondere oben und unten, mit zumindest einer Lage eines Fasermaterials, beispielsweise eines Faserhalbzeuges, als Deckschichten bzw. Decklagen belegt oder ummantelt werden. Hierbei kann das Fasermaterial bereits eine Matrix enthalten.

Anschließend wird der das Paket ("composite package") aus Wabenkern und Decklagen mit einer Matrix, nämlich Polyurethan - PUR, getränkt, benetzt und /oder besprüht, vorzugsweise im CSM Sprühverfahren.

Anschließend wird das mit Matrix beaufschlagte Paket in ein Formpresswerkzeug, nämlich ein beheiztes Formpresswerkzeug, gelegt und entsprechend der geforderten Bauteilgeometrie verpresst und ausgehärtet.

Anschließen kann optional während das Bauteil im Formpresswerkzeug belassen wird, rund um das Werkzeug bzw. rund um die Werkzeuggeometrie ein "contur cut", also ein grober Zuschnitt durchgeführt werden.

Anschließend kann optional das Bauteil bedarfsweise im Formpresswerkzeug oder außerhalb des Formpresswerkzeugs gekühlt bzw. thermisch stabilisiert werden, bevorzugt in einem weiteren Werkzeug, insbesondere in einer Werkstückkühlvorrichtung, gekühlt bzw. thermisch stabilisiert werden. Unter "thermisch stabilisiert" wird dabei verstanden, dass das Bauteil eine Temperatur unter der letzten Umwandlungstemperatur einnimmt um einen stabilen Zustand zu erreichen. Das Kühlen in einer Werkstückkühlvorrichtung erlaubt dabei, insbesondere im Hinblick auf eine durchgehende Produktion nur eines Bauteiles, die kürzeste Produktionszeit.

Optional erfolgt ein Tempern des Bauteils, also ein Temperaturprozess, damit sich Bauteilverzüge ausgleichen bzw. sich der Vernetzungsgrad der Materialien erhöht, in einem weiteren Werkzeug oder einer weiteren Vorrichtung. Beispielsweise kann das Bauteil zum Abkühlen nur auf einen Rahmen oder einseitig auf eine Fläche gelegt werden. Es kann aber auch eine geschlossene Kühlvorrichtung verwendet werden, die das Bauteil vollumfänglich umschließt und in welchem die Temperatur geregelt werden kann.

Optionales erfolgt noch ein (nochmaliges) Kühlen des Bauteiles.

Hierauf erfolgt bevorzugt ein Beschnitt der Außenkontur bzw. Zuschnitt der Seitenbereiche/Kanten entsprechend der geforderten Bauteilkontur sowie optional auch eine spannabhebende Bearbeitung, wie beispielsweise Fräsen der Außenkontur sowie Fräsen und Bohrungen für Inserts und ähnliche andere Ausnehmungen im Bauteil.

Es erfolgt das Aufbringen der lackierfähigen Class-A Oberfläche (Oberflächenauftrag bzw. RIM-Schicht) auf der Sichtseite und /oder um die Außenkanten, vorzugsweise im V-RIM (Vakuum-RIM)Verfahren in einem weiteren Werkzeug. Hierdurch wird erreicht, dass keine sonst übliche störende Welligkeit an der Oberfläche des Bauteils verbleibt.

Optional kann an dieser Stelle (nochmals) ein Tempern erfolgen.

Optional kann eine lackierfertige Aufbereitung der so hergestellten Oberflächen durch Oberflächenaktivierung in einem finalen Finishing-Verfahren erfolgen.

Optional können abschließend Inserts in das Bauteil eingesetzt werden.

Das Bauteil kann anschließend lackiert werden.

Der Wabenkern bzw. der mit Deckschichten belegte oder ummantelte Wabenkern kann mittels Spannrahmen gehalten werden, sodass dieser gedreht und gewendet werden kann, um problemlos einen Sprühauftrag oder ein Benetzen mit einem Matrixmaterial durchzuführen.

Der Wabenkern kann an erforderlichen Stellen, zum Beispiel zur Verstärkung in einem späteren Scharnieraufnahmebereich, in verstärkter Bauweise ausgeführt sein kann, um unterschiedliche Stauchhärten, zum Beispiel für den Fußgängerschutz, sowie gewünschte Stabilitäten zu erreichen.

Der Matrixaufbau kann unstetig erfolgen bzw. je nach Bauteilerfordernissen partiell unterschiedlich sein, insbesondere kann Zonenweise eine zusätzliche Zugabe von Kurzfasermaterial (Glas-, Kohle-, Textilfasern etc.) erfolgen, insbesondere so, dass je nach Bauteilerfordernissen partiell unterschiedliche Eigenschaften des Bauteils in verschiedenen über die Fläche des Bauteils sich erstreckenden Zonen entstehen.

Der Matrixaufbau des Sandwichbauteiles kann bewirken, dass eine klebende Verbindung zwischen Wabenkern und Decklagen hergestellt wird.

Bevorzugt erfolgt das Formpressen während das Paket bzw. die auf den Decklagen befindliche Matrix noch nass ist.

Das Aufbringen der lackierfähigen Class-A Oberfläche erfolgt bevorzugt mittels Injizieren von Matrix Füllmaterial, nämlich PUR, mit Drücken unter 20 bar und/oder unter Zuhilfenahme eines Vakuums in einem dem Injektionsbereich gegenüberliegenden Bereich in einem geschlossenen und zonenbeheizten Werkzeug. Ein zonenbeheiztes Werkzeug ermöglicht sowohl dass der Matrixauftrag auf die Deckschichten unterschiedlich dick sein kann, als auch dass über die Fläche des Bauteiles verteilt nicht immer die gleiche Anzahl oder gleichartige Wabenkerne übereinandergeschichtet verwendet werden müssen. Erfindungsgemäß können zum Beispiel in einem mittleren Bereich des Bauteils 2-3 Wabenkerne übereinander geschichtet und in einem Randbereich nur 1 oder 2 Wabenkerne übereinander geschichtet sein, um das Bauteil an jeweilige Funktionsanforderungen, beispielsweise an einen optimalen Fußgängerschutz bzw. Kopfaufprallschutz, individuell anpassen zu können. Daher kann im Bauteil je nach Dicke bzw. unterschiedlichem Aufbau ein unterschiedlicher Wärmebedarf für das Aufbringen der Class-A Oberfläche und somit ein zonenbeheiztes Werkzeug erforderliche sein.

Die Matrix wird bevorzugt in einen Spalt zwischen Sandwichbauteil und RIM-Werkzeug über mindestens eine punktförmige und / oder mindestens eine Flächeneinspritzdüse gedrückt. Besonders bevorzugt wird die Fließfront bzw. der Matrixfluss über ein an der gegenüberliegenden Seite an ein oder mehreren Punkte bzw. Bereichen flächig angelegtes Vakuum gezogen. Hierdurch wird eine lückenlose, über eine große Fläche gehende, kontinuierliche Spaltfüllung ermöglicht.

Im Gegensatz zu einem üblichen sehr dünnen Aufbringen von RIM-Schichten, insbesondere unter 0,01 mm, was ein vorzeitiges Erstarren der Matrix bewirkt, wird in der erfindungsgemäßen Lösung bevorzugt ein zusätzliches Vakuum verwendet und hierdurch eine wesentlich dickere RIM-Schicht, also Matrix-Schicht, von ca. 0,2 - 2 mm erzeugt und dadurch sichergestellt, dass das Material nicht vorzeitig erstarrt und sich eine gleichmäßige Schicht bildet.

Die mindestens eine punktförmige und / oder mindestens eine Flächeneinspritzdüse, also der Anguss, liegt bevorzugt einerseits zwischen den beiden Werkzeugen bzw. Werkzeughälften und andererseits im Kantenbereich des Sandwichbauteils, damit das Bauteil auf der Unterseite und auf der Oberseite gleichmäßig umströmt wird.

Im Werkzeug sind bevorzugt zusätzlich Entlüftungs- und/oder Vakuumbausteine vorgesehen, um beim Injizieren die Luft aus dem Werkzeug zu extrahieren bzw. den Injizierungsdruck so gering wie möglich zu halten.

Bevorzugt ist an der Nicht-Sichtseite des Bauteils eine Dichtung angeordnet, die verhindert, dass sich die RIM-Schicht auf die Nicht-Sichtseite, bevorzugt die Unterseite des Bauteils, verteilt, und die zwei separate Vakuumbereiche voneinander trennt.

Durch die Formgebung der Dichtung wird die Form des Endes der RIM-Schicht bestimmt. Durch die Formgebung der Dichtung kann bevorzugt beispielsweise ein kontinuierlicher Übergang zwischen Oberseite der RIM-Schicht und Deckschicht eingestellt werden.

Das Class-A Oberflächenmaterial, also die RIM-Schicht, versiegelt bevorzugt die Beschnittkanten des Bauteils, vorzugsweise an den Seitenbereichen und /oder Kantenbereichen des Bauteils und/oder die Stirnseiten des Wabenkernes. Bevorzugt werden an den seitlichen Enden des Sandwichbauteils die beiden Deckschichten mittels der RIM-Schicht verbunden also verschlossen.

Das Faserverbund-Sandwichbauteil kann während des V-RIM Oberflächenauftrages über ein Vakuum-Spannsystem gehalten werden, insbesondere im Unterteil der Aufnahme gehalten werden.

Nach dem V-RIM Oberflächenauftrag kann die Oberfläche des Bauteiles zu glatt sein, so dass die Oberfläche aus Lackhaftungsgründen wieder aufgeraut werden muss bzw. in einem finalen Finishing-Verfahren, beispielsweise durch Schleifen, einen Plasmaprozess oder Chemisch aktiviert werden muss.

Bevorzugt wird das Faserverbund-Sandwichbauteil während des RIM-Oberflächenauftrages mittels eines Faserverbund-Referenzpunktsystems positioniert.

Das Matrixmaterial der Deckschichten als auch der RIM-Schicht ist vorzugsweise ein duroplastischer Kunststoff, bevorzugter PUR, wobei die Deckschichten und die RIM-Schicht nicht das gleiche Matrixmaterial, insbesondere nicht das gleiche PUR Material verwenden müssen.

### Kurzbeschreibung der Zeichnungen

Die Erfindung wird im Folgenden beispielhaft unter Bezugnahme auf die Zeichnungen beschrieben.
- Fig. 1: zeigt Schritte in einem erfindungsgemäßen Verfahren zur Herstellung eines Sandwichbauteiles.
- Fig. 2: zeigt eine Vorrichtung zur Durchführung eines Schrittes in einem erfindungsgemäßen Verfahren zur Herstellung eines Sandwichbauteiles, nämlich ein RIM-Werkzeug (rechts), sowie eine Detailansicht dazu (links).
- Fig. 3: zeigt ein erfindungsgemäßes Sandwichbauteil.

### Detaillierte Beschreibung der Erfindung

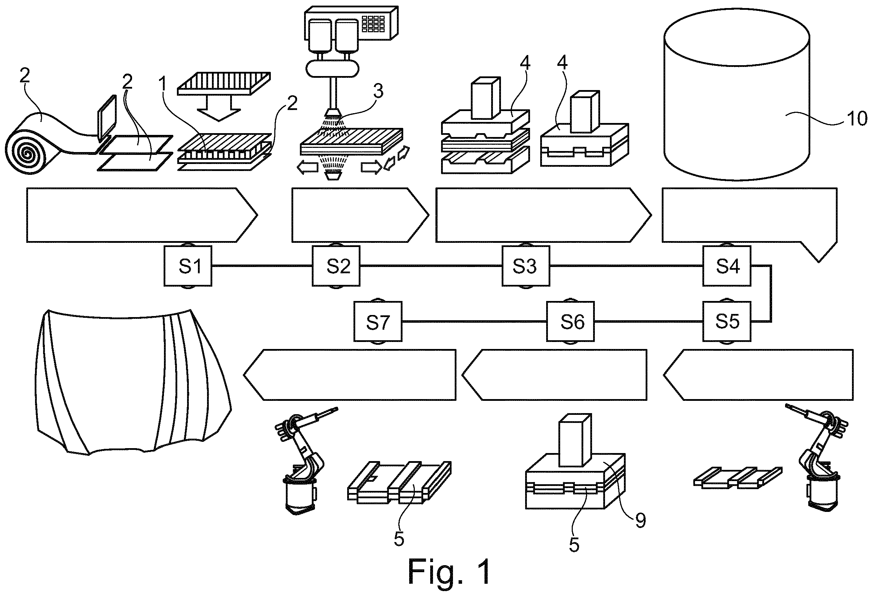

In Fig. 1 sind, teilweise optionale, Schritte S1 bis S7 in einem erfindungsgemäßen Verfahren zur Herstellung eines Sandwichbauteiles dargestellt.

Ein erfindungsgemäßes Verfahren zur Herstellung eines Faserverbund-Sandwichbauteiles, umfasst bevorzugt dass ein Wabenkern 1 mit einer Vielzahl von Stegen, oben und unten mit zumindest einer Lage eines Fasermaterials 2, beispielsweise eines Faserhalbzeuges, als Deckschichten bzw. Decklagen belegt oder ummantelt wird (Schritt 1, S1).

Die Kerne bzw. Wabenkerne sind vorzugsweise Papierkerne, Kartonkerne oder bestehen aus anderen, auf Zellulose basierten Materialien, können aber auch Kerne aus Kunststoff, wie Polyurethan (PU), Polypropylen (PP) und ähnliches oder aus Metall, Holz oder Schaummaterial sein.

Die Wabenkerne können Stege in bienenwabenförmiger Anordnung aufweisen oder in wellenförmiger Anordnung. Die Stege können jedoch auch runde, dreieckige, rechteckige, quadratische, trapezförmige oder vieleckige Zellen ausbilden, wobei es sich hierbei (innerhalb eines Wabenkernes) nicht um regelmäßig wiederkehrende Formen handeln muss.

Anschließend wird der das Paket("composite package") aus Wabenkern 1 und Decklagen 2 mit einer Matrix 3, nämlich PUR, getränkt, benetzt und /oder besprüht, vorzugsweise im CSM Sprühverfahren (Schritt 2, S2).

Anschließend wird das mit Matrix 3 beaufschlagte Paket in ein Formpresswerkzeug 4, vorzugsweise ein beheiztes Formpresswerkzeug, gelegt und entsprechend der geforderten Bauteilgeometrie verpresst und ausgehärtet (Schritt 3, S3).

Optional kann während das Bauteil im Werkzeug belassen wird, rund um das Werkzeug bzw. rund um die Werkzeuggeometrie ein "contur cut", also ein grober Zuschnitt durchgeführt werden.

Anschließend kann opional das Bauteil bedarfsweise im Formpresswerkzeug 4 oder außerhalb des Formpresswerkzeuges gekühlt werden, insbesondere in einem weiteren Werkzeug, wie in einer Werkstückkühlvorrichtung 10, gekühlt bzw. thermisch stabilisiert werden (Schritt 4, S4).

Optional erfolgt ein Tempern des Bauteils, also ein Temperaturprozess über längere Zeit, damit sich Bauteilverzüge ausgleichen bzw. sich der Vernetzungsgrad der Materialien erhöht, in einem weiteren Werkzeug oder einer weiteren Vorrichtung.

Optionales erfolgt noch ein (nochmaliges) Kühlen des Bauteiles.

Hierauf erfolgt bevorzugt ein Beschnitt der Außenkontur bzw. Zuschnitt der Seitenbereiche/Kanten entsprechend der geforderten Bauteilkontur sowie optional auch spannabhebende Bearbeitung, wie beispielsweise Fräsen der Außenkontur sowie Fräsen und Bohrungen für Inserts und ähnliche andere Ausnehmungen im Bauteil (Schritt 5, S5).

Es erfolgt das Aufbringen der lackierfähige Class-A Oberfläche, also ein Oberflächenauftrag als RIM-Schicht 5 auf der Sichtseite und /oder um die Außenkanten, vorzugsweise in einem V-RIM Verfahren, also bei Verwendung eines Vakuums zum Ansaugen der eingebrachten Matrix 3, in einem RIM-Werkzeug 9 (Schritt 6, S6). Hierdurch wird erreicht, dass keine sonst übliche störende Welligkeit, Lunkerbildungen oder Poren an der sichtbaren Oberfläche des Bauteils verbleibt.

Optional kann an dieser Stelle (nochmals) ein Tempern erfolgen.

Optional kann eine lackierfertige Aufbereitung der so hergestellten Oberflächen durch Oberflächenaktivierung in einem finalen Finishing-Verfahren erfolgen (Schritt 7, S7).

Optional können Inserts in das Bauteil eingesetzt werden (Schritt 7, S7).

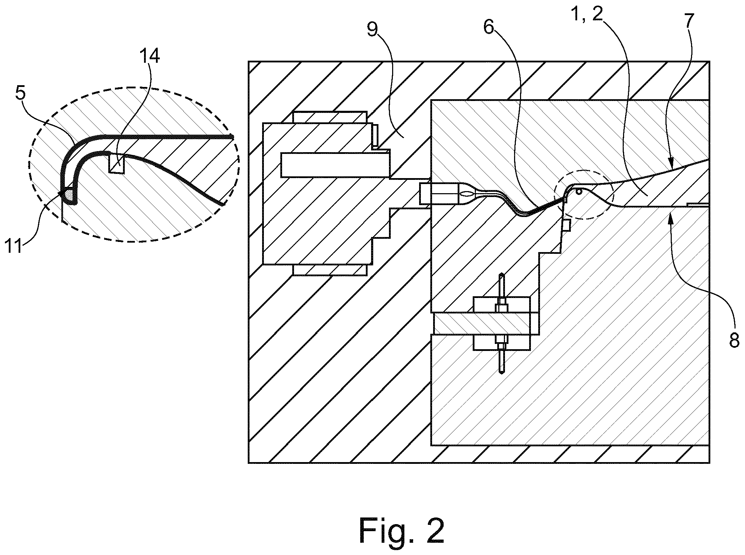

Beim Vakuum - Reaction Injection Molding (V-RIM) erfolgt ein Injizieren eines flüssigen PUR Materials unter Druck und unter Aufbringung eines Vakuums an der der Fließfront gegenüberliegenden Seite in einen zwischen der Oberfläche des Sandwichbauteiles und der Oberfläche des RIM Werkzeuges 9 erzeugten Spalt - siehe Fig. 2. Das Polyurethan-Überzugsmaterial reagiert dabei durch Einwirken von Temperatur (beheiztes Werkzeug) mit Aushärtung im Werkzeugspalt. Dabei ergibt sich abhängig von der Werkzeugoberfläche die Bauteilqualität. Das Bauteil ist nach der finalen Konturbearbeitung (entfernen von Anguss und Kantenüberständen, Oberfläche anschleifen) lackierbereit.

Für die Herstellung eines Faserverbund Sichtbauteiles, wie zum Beispiel einer Motorhaube, mit werkzeugfallender Class-A Oberfläche, gefertigt im PUR-Nasspressverfahren wird bevorzugt ein Papierwabenkern 1 oben und unten mit zumindest einem Layer 2 mit Fasermaterial oder Faserhalbzeugmaterial beispielsweise aus Geweben, Gelegen, Gestricken, Matten, Gittern und Vliesen aus Glasfaser und / oder Kohlefaser und / oder textilen Materialien und / oder Keramikfasern und / oder Naturfasern und / oder Kunststofffasern umhüllt. Um die unterschiedlichen Stauchhärten sowie die Stabilität, beispielsweise im Scharnierbereich zu erreichen, kann der Wabenkern 1 an den erforderlichen Stellen in verstärkter Bauweise ausgeführt werden. Im Anschluss erfolgt der Polyurethan Matrix 3 Auftrag im PUR-CSM Sprühverfahren. Bei diesem Sprühauftrag werden die Faserhalbzeuge 2 beidseitig mit einem thermisch aktivierbaren PUR-System benetzt das in optimierter Schichtstärke aufgebracht eine Verbindung zwischen Kern 1 und Decklagen 2 herstellt. Hierbei ist auch ein gezielter Matrixauftrag in sämtlichen Bauteilbereichen unter Zugabe von Kurzfasermaterial wie Glasfaser, Kohlefaser, textile Fasern, möglich. Im folgenden Prozessschritt wird das Bauteil innerhalb einer beheizten Form 4 entsprechend seiner geforderten Bauteilgeometrie verpresst und ausgehärtet. Der Beschnitt der Außenkontur folgt als nächster Schritt bevor im V-RIM Verfahren auf der Sichtseite und um die Außenkanten des Bauteiles herum die lackierfähige Class-A Oberfläche (RIM-Schicht 5) aufgebracht und in einem finalen Finishing Verfahren (Oberflächenaktivierung) lackierfertig aufbereitet wird. Das V-RIM Verfahren ist auf Grund der Bauteilgröße von Sichtbauteilen, zum Beispiel in der Automobilindustrie beispielsweise für Motorhauben, im Verhältnis zur Schichtdicke (Spalt zwischen Sandwichbauteil und RIM Werkzeug 9 zwischen 0,2 - 2,0mm) höchst vorteilhaft. Dabei wird die PUR RIM Matrix 3 nicht nur in den Spalt zwischen Sandwichbauteil und RIM Werkzeug 9 über Punkt- und / oder Flächeneinspritzdüsen 6 gedrückt sondern die Fließfront über ein an der gegenüberliegenden Seite an ein oder mehreren Punkten bzw. über flächig angelegtem Vakuum 7gezogen und ermöglicht somit eine lückenlose und prozesssichere Spaltfüllung. Es gilt das Verhältnis von Bauteiloberfläche zu Schichtdicke im Kontext zur Bauteilgeometrie zu optimieren, wobei das minimierte Bauteil-Gesamtgewicht den entscheidenden Einflussfaktor bildet. Herkömmliche Spaltfüllsysteme haben den Nachteil, dass ab Verhältnissen von Oberflächen zu Schichtdicke von unter 0,01 das Erstarren der Fließfront noch vor der vollständigen Spaltfüllung erfolgt. Auch PUR Systeme mit herkömmlicher Aushärteverzögerung sind nicht in der Lage die geforderte Offenzeit bei gleichzeitigem Anspruch auf die werkzeugfallende CLASS-A Oberflächenqualität zu gewährleisten - sie neigen verstärkt zu Blasenbildung im Klimawechseltest bedingt durch einen Aktivator. Das Sandwichbauteil selbst wird während des V-RIM Oberflächenauftrages über ein Vakuum Spannsystem bzw. über flächig angelegtem Vakuum 8 im Unterteil der Aufnahme gehalten und über ein Faserverbund RPS System positioniert. Hierbei ist das Vakuum 7 vom Vakuum 8 beispielsweise durch eine Dichtung 14 getrennt, sodass die zur Erfüllung der jeweiligen unterschiedlichen Funktion, wie beispielsweise ziehen der Matrix oder Festhalten des Sandwichbauteiles an der Aufnahme bzw. am Werkzeug, nötigen unterschiedlichen Vakuum-Drücke einstellbar sind.

Um bei Sandwichbauteilen, die eine relativ geringe beschädigungsresistente Druckfestigkeit besitzen, eine CLASS-A Oberfläche sowie eine Versiegelung der Beschnittkanten zu erhalten, bedarf es einer Oberflächen- Applikation mittels Injizieren von Matrix Füllmaterial mit Drücken unter 20 bar und/oder unter Zuhilfenahme eines Vakuums in einem dem Injektionsbereich gegenüberliegenden Bereich in einem geschlossenen und/oder beheizten/zonenbeheizten Werkzeug (Fig. 2).

Dieses Oberflächenmaterial, zum Beispiel Polyurethan und/oder andere fließfähige Oberflächenmaterialien für Kunststoffoberflächen, wird in einem temperierten Werkzeug, im Temperaturbereich zwischen 40°C und 170°C, ausgehärtet. Durch gezielte Steuerung der Parameter Mischungsverhältnis-Matrixmaterial, Viskosität und Werkzeugtemperatur können Aushärtezeiten von unter 5 Minuten erreicht werden. Um den Aushärteprozess homogener gestalten und kontrolliert Wärme einbringen zu können wird das Werkzeug in Temperaturzonen eingeteilt. Diese sind unabhängig voneinander und der Bauteilgeometrie entsprechend zu temperieren, also zu heizen und/oder zu kühlen. Zusätzlich kann ein zusätzlicher Temperprozess nach der Aushärtung / Abkühlung bzw. nach der V-RIM Applizierung integriert werden, um die Temperaturstabilität des Bauteils, vor allem für eine Inline- und Online-Lackierbeständigkeit zu erhöhen. Dieser Temperprozess kann bis zu 210°C betragen und max. 60min dauern, entweder in einem beheizten Werkzeug, Ofen oder in einen Durchlaufofen.

Um eine dauerhafte anspruchsvolle Oberfläche zu gewährleisten darf die Oberflächenschicht nicht dünner als 0,2 mm und nicht dicker als 2,0 mm sein. Das Werkzeug kann für eine bessere Oberflächen-Dickeneinstellung mittels Tauchkantentechnologie ausgelegt sein.

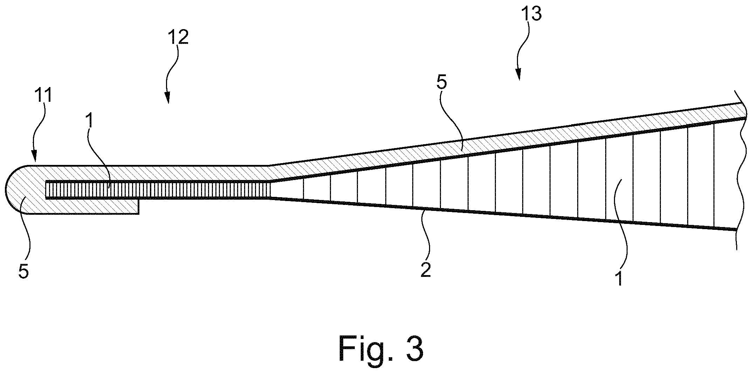

Im Kantenbereich füllt das Oberflächenmaterial den Spalt zwischen den beschnittenen (auch gefrästen, gelaserten, gestanzten oder ähnlich vorkonfektionierten) Strukturbauteil und der Werkzeugoberfläche auf. Dabei kann die Dicke der Oberflächenschicht wesentlich größer sein und auch einige Millimeter betragen - siehe Fig. 2 und Fig. 3.

Das Bauteil wird in das Werkzeug händisch oder automatisiert eingelegt und positioniert, nämlich bevorzugt über die Bauteilform oder mittels eines RPS-Systems zentriert, und mittels Vakuumansaugung an der gegenüberliegenden Bauteilfläche und/oder mittels Zuzieh- und Fixierungshilfen gehalten.

Das Werkzeug hat einen oder mehrere Punktangusse oder einen Fächeranguss, um das Oberflächenmaterial blasenfrei über die Bauteiloberfläche und entsprechend der gewählten Schichtdicke zu verteilen. Weiters sind im Werkzeug Entlüftungs- oder Vakuumbausteine vorgesehen um beim Injizieren die Luft aus dem Werkzeug zu extrahieren bzw. den Injizierungsdruck so gering wie möglich halten zu können. Die Position des Angusses bzw. der Entlüftungsbausteine ist abhängig von der Bauteilform sowie dem Werkzeug und dem gewählten Anlagenkonzept (Kipp- und Schwenkwerkzeug).

Unmittelbar vor Beendigung der Werkzeug - Bauteil Spaltfüllung (abhängig vom zu befüllenden Werkzeug bzw. der Bauteilform) werden die Entlüftungs- und/oder Vakuumbausteine geschlossen um die prozesssichere und blasenfreie Oberflächen- und Kantenfüllung sicher zu stellen. Der Zeitpunkt ist von mehreren Parametern, wie Temperatur von Werkzeug, Bauteil und/oder Matrix, Dauer des Befüllvorganges, Füllvolumen (parametrisiert) und Fülldruck abhängig.

Nach Aushärtung wird das Werkzeug geöffnet und das Bauteil entnommen. Je nach Bauteilgröße und Form können im Werkzeug Auswerfer integriert sein die eine beschädigungsfreie und einfache Entnahme gewährleisten.

Der Grad am Bauteil bedingt durch die Werkzeugtrennebene kann im Anschluss händisch oder maschinell beschnitten oder abgeschliffen werden.

Das Bauteil ist für die weiteren Prozessschritte (Vorbereitung zur Lackierung) bereit.

Der gesamte Prozess läuft bevorzugt innerhalb der Taktzeit von 280 Sekunden ab, wobei das Aufbringen der Oberflächenschicht (RIM-Schicht 5) zur Erreichung der CLASS-A Oberfläche bevorzugt ausschließlich im späteren Sichtbereich des Bauteiles und um Bauteilkanten herum erfolgt. Das Versiegeln der Kanten dient der Bauteilabdichtung sowie der Verbesserung des haptischen Eindruckes. Der V-RIM Prozess wird bevorzugt als paralleler Prozessschritt zur Sandwichherstellung durchgeführt.

Ein geeignetes PUR Material, das im V-RIM Verfahren verarbeitet werden kann und die geforderte Oberflächengüte sicherstellt, ist beispielsweise von der Firma Rühl Puromer GmbH erhältlich.

Ein erfindungsgemäßes Sandwichbauteil kann auch zur Funktionsintegration genutzt werden und insbesondere die Funktionen Antennenfunktion, Beleuchtung, Energiespeicherfunktion, Luftzuführung und - leitung im Motorraum realisieren. Weitere Funktionsintegration kann sich auch bezüglich optischer Effekte wie direkte und indirekte Beleuchtung ergeben, die einerseits als Sicherheitsfunktion ausgeführt sein können, andererseits als designunterstützendes Element Konturen und Strukturen am Fahrzeug hervorheben können.

In Fig. 3 ist eine Schnittzeichnung dargestellt, die ein erfindungsgemäßes fertiges, gecrushtes Sandwichbauteil zeigt. Das Bauteil umfasst einen Wabenkern 1, zwei Deckschichten 2, wobei die Waben des Wabenkerns 1 vor allem in einer ersten Zone 12 besonders stark gecrusht bzw. formgepresst sind, in einer zweiten Zone 13 weniger gepresst sind und einen Verlauf zur Zone 12 bilden. Das Bauteil weist zudem eine RIM-Schicht 5 und eine Kantenversiegelung als RIM-Schicht 5 an der Stirnseite 11 des Bauteils auf. In dieser Fig. 3 ist auch gut ersichtlich, dass durch die Dichtung 14 (dargestellt in Fig. 2) die Form des Endes der RIM-Schicht 5 bestimmt werden kann. Bei beispielsweise quadratischem Dichtungsquerschnitt der Dichtung 14 stellt sich auf der Unterseite des Sandwichbauteiles ein entsprechender Übergang der RIM-Schicht 5 ein - hierbei ist natürlich auch die Formgebung des Werkzeugs maßgeblich. Mittels anderer Dichtungsformen der Dichtung 14 und /oder anderer Werkzeugform wären ein anderer Verlauf bzw. Auslauf der RIM-Schicht 5 bzw. ein anderer Übergang der RIM-Schicht 5 zur Deckschicht 2 möglich.

### Bezugszeichenliste

- 1: Wabenkern
- 2: Faserlage
- 3: Matrix
- 4: Formpresswerkzeug
- 5: RIM-Schicht (Reaction Injection Molding)
- 6: Punkt- und / oder Flächeneinspritzdüse
- 7: erstes Vakuum
- 8: zweites Vakuum
- 9: RIM-Werkzeug
- 10: Werkstückkühlvorrichtung
- 11: Stirnseite
- 12: erste Zone
- 13: zweite Zone
- 14: Dichtung

## Patentansprüche

1. Verfahren zur Herstellung eines Sandwichbauteiles, bei dem
- in verschiedenen Zonen unterschiedlich viele übereinandergeschichtete Wabenkerne (1), mit einer Vielzahl an Stegen, beidseitig mit zumindest einer Lage eines Fasermaterials (2), welche Decklagen bilden, belegt oder ummantelt werden,
- das Paket aus Wabenkernen (1) und Faserlagen (2) mit einer PUR-Matrix (3) getränkt, benetzt oder besprüht wird,
- das Paket in ein Formpresswerkzeug (4) gelegt und entsprechend der geforderten Bauteilgeometrie zu einem Bauteil verpresst wird und aushärtet,
- zumindest auf eine Sichtseite des Bauteils anschließend eine Class-A Oberfläche als RIM-Schicht (5) in einem Reaction Injection Molding Verfahren, insbesondere einem Vakuum Reaction Injection Molding Verfahren, aufgebracht wird, wobei das Aufbringen der RIM-Schicht (5) in einem geschlossenen und zonenbeheizten RIM-Werkzeug (9) erfolgt.

2. Verfahren nach Anspruch 1,
**dadurch gekennzeichnet, dass** ein Aufbringen einer lackierfähigen Oberfläche, nämlich der RIM-Schicht (5), durch Injizieren der PUR-Matrix erfolgt, bevorzugt mit einem Druck von weniger als 20 bar.

3. Verfahren nach Anspruch 1 bis 2,
**dadurch gekennzeichnet, dass** das Aufbringen der RIM-Schicht (5) über mindestens eine punktförmige Einspritzdüse und/oder mindestens eine Flächeneinspritzdüse (6) erfolgt.

4. Verfahren nach Anspruch 1 oder 3,
**dadurch gekennzeichnet, dass** das Aufbringen der RIM-Schicht (5) durch Injizieren der PUR-Matrix (3) bei Anliegen eines Vakuums (7) in einem dem Injektionsbereich gegenüberliegenden Bereich des Bauteils erfolgt.

5. Verfahren nach Anspruch 1 bis 4,
**dadurch gekennzeichnet, dass** die RIM-Schicht (5) eine Dicke von 0,2 - 2 mm aufweist.

6. Verfahren nach zumindest einem der vorhergehenden Ansprüche,
**dadurch gekennzeichnet, dass** das Tränken, Benetzen oder Besprühen im CSM-Sprühverfahren erfolgt.

7. Verfahren nach zumindest einem der vorhergehenden Ansprüche,
**dadurch gekennzeichnet, dass** das Formpresswerkzeug (4) beheizt ist und das nach dem Formpressen das Bauteil im Formpresswerkzeug (4) oder außerhalb des Formpresswerkzeugs (4), insbesondere in einer Werkstückkühlvorrichtung (10), abgekühlt und / oder thermisch stabilisiert wird.

8. Verfahren nach zumindest einem der vorhergehenden Ansprüche,
**dadurch gekennzeichnet, dass** nach dem Formpressen das Bauteil getempert wird.

9. Verfahren nach zumindest einem der vorhergehenden Ansprüche,
**dadurch gekennzeichnet, dass** nach dem Formpressen, insbesondere im Formpresswerkzeug (4), ein grober Zuschnitt des Bauteils erfolgt, insbesondere durch spanabhebende Bearbeitung.

10. Verfahren nach zumindest einem der vorhergehenden Ansprüche,
**dadurch gekennzeichnet, dass** vor dem Aufbringen der RIM-Schicht (5) ein Beschnitt der Außenkontur des Bauteils erfolgt und/oder eine spanabhebende Bearbeitung, wie beispielsweise Fräsen und/oder Bohren des Bauteils.

11. Verfahren nach zumindest einem der vorhergehenden Ansprüche,
**dadurch gekennzeichnet, dass** nach dem Aufbringen der RIM-Schicht (5) eine Oberflächenaktivierung stattfindet und/oder anschließend das Bauteil lackiert wird.

## Claims

1. Method for producing a sandwich component,
in which method
- in different zones different numbers of honeycomb cores (1), layered one on top of the other and having a multiplicity of webs, are lined or encapsulated on both sides with at least one ply of a fibrous material (2), said plies forming cover plies,
- the pack composed of honeycomb cores (1) and fibrous plies (2) is impregnated, wetted or sprayed with a PUR matrix (3),
- the pack is placed in a compression moulding tool (4) and, in accordance with the required component geometry, is compressed to form a component and hardens,
- at least a visible side of the component subsequently has a class-A surface applied thereto as an RIM layer (5) in a Reaction Injection Moulding process, in particular in a Vacuum Reaction Injection Moulding process, wherein the application of the RIM layer (5) is performed in a closed and zonally heated RIM tool (9).

2. Method according to Claim 1,
**characterized in that** an application of a paintable surface, specifically the RIM layer (5) is performed by injection of the PUR matrix, preferably with a pressure of less than 20 bar.

3. Method according to Claim 1 to 2,
**characterized in that** the application of the RIM layer (5) is performed by way of at least one punctiform injection nozzle and/or at least one areal injection nozzle (6).

4. Method according to Claim 1 or 3,
**characterized in that** the application of the RIM layer (5) is performed by injection of the PUR matrix (3) with the application of a vacuum (7) in a region of the component situated opposite the injection region.

5. Method according to Claim 1 to 4,
**characterized in that** the RIM layer (5) has a thickness of 0.2 - 2 mm.

6. Method according to at least one of the preceding claims,
**characterized in that** the impregnation, wetting or spraying is performed in a CSM spraying process.

7. Method according to at least one of the preceding claims,
**characterized in that** the compression moulding tool (4) is heated, and **in that**, after the compression moulding, the component is cooled and/or thermally stabilized in the compression moulding tool (4) or outside the compression moulding tool (4), in particular in a workpiece cooling device (10).

8. Method according to at least one of the preceding claims,
**characterized in that**, after the compression moulding, the component is tempered.

9. Method according to at least one of the preceding claims,
**characterized in that**, after the compression moulding, in particular in the compression moulding tool (4), coarse cutting of the component to shape is performed, in particular by way of a chip-removing machining process.

10. Method according to at least one of the preceding claims,
**characterized in that**, before the application of the RIM layer (5), trimming of the outer contour of the component is performed, and/or chip-removing machining, such as for example milling and/or drilling of the component.

11. Method according to at least one of the preceding claims,
**characterized in that**, after the application of the RIM layer (5), a surface activation process is performed, and/or the component is subsequently painted.

## Revendications

1. Procédé de fabrication d'un élément sandwich, dans lequel
- dans différentes zones un nombre différent de noyaux alvéolaires (1) en couches superposées les unes au-dessus des autres, avec une pluralité de nervures, sont garnis ou enveloppés des deux côtés avec au moins une couche d'un matériau fibreux (2), lesquelles couches forment des couches de recouvrement,
- le paquet constitué de noyaux alvéolaires (1) et de couches de fibres (2) est imprégné, mouillé ou pulvérisé avec une matrice en PUR (3),
- le paquet est placé dans un outil de moulage par compression (4) et en fonction de la géométrie voulue pour l'élément, est pressé pour former un élément puis durci,
- au moins sur un côté visible de l'élément, une surface de classe A est ensuite appliquée en tant que couche MIR (5) dans un procédé de moulage par injection et réaction, en particulier un procédé de moulage par injection et réaction sous vide, l'application de la couche MIR (5) s'effectuant dans un outil MIR (9) fermé et chauffé par sections.

2. Procédé selon la revendication 1,
**caractérisé en ce qu'**une application d'une surface pouvant être laquée, à savoir la couche MIR (5), est réalisée par injection de la matrice en PUR, de préférence avec une pression inférieure à 20 bars.

3. Procédé selon la revendication 1 ou 2,
**caractérisé en ce que** l'application de la couche MIR (5) s'effectue par le biais d'au moins une buse d'injection ponctuelle et/ou par le biais d'au moins une buse d'injection de surface (6).

4. Procédé selon la revendication 1 ou 3,
**caractérisé en ce que** l'application de la couche MIR (5) s'effectue par injection de la matrice en PUR (3) avec établissement d'un vide (7) dans une région de l'élément opposée à la région d'injection.

5. Procédé selon les revendications 1 à 4,
**caractérisé en ce que** la couche MIR (5) présente une épaisseur de 0,2 à 2 mm.

6. Procédé selon au moins l'une quelconque des revendications précédentes, **caractérisé en ce que** l'imprégnation, le mouillage ou la pulvérisation ont lieu dans un procédé de moulage par pulvérisation composite (CSM - composite spray moulding).

7. Procédé selon au moins l'une quelconque des revendications précédentes, **caractérisé en ce que** l'outil de moulage par compression (4) est chauffé et **en ce qu'**après le moulage par compression, l'élément est refroidi et/ou stabilisé thermiquement dans l'outil de moulage par compression (4) ou à l'extérieur de l'outil de moulage par compression (4), en particulier dans un dispositif de refroidissement de pièces (10).

8. Procédé selon au moins l'une quelconque des revendications précédentes, **caractérisé en ce qu'**après le moulage par compression, l'élément est recuit.

9. Procédé selon au moins l'une quelconque des revendications précédentes, **caractérisé en ce qu'**après le moulage par compression, en particulier dans l'outil de moulage par compression (4), une découpe grossière de l'élément est effectuée, notamment par usinage par enlèvement de copeaux.

10. Procédé selon au moins l'une quelconque des revendications précédentes, **caractérisé en ce qu'**avant l'application de la couche MIR (5), une découpe du contour extérieur de l'élément est réalisée et/ou un usinage par enlèvement de copeaux, comme par exemple un fraisage et/ou un perçage de l'élément.

11. Procédé selon au moins l'une quelconque des revendications précédentes, **caractérisé en ce qu'**après l'application de la couche MIR (5), a lieu une activation de surface et/ou l'élément est ensuite laqué.
